# EUROPEAN PATENT SPECIFICATION

(11) **EP 2 779 790 B1**
(45) Date of publication and mention of the grant of the patent: **27.04.2016**
(21) Application number: 12848462.3
(22) Date of filing: 28.06.2012
(51) Int. Cl.: H05B 7/107, H05B 7/109, F27D 11/10, G01B 5/00, H05B 7/09, C01B 31/32

(54) **SELF-BAKING ELECTRODE UPPER-END DETECTION APPARATUS AND SELF-BAKING ELECTRODE UPPER-END MANAGEMENT METHOD**
VORRICHTUNG ZUR ERKENNUNG DES OBEREN ENDES EINER SELBSTBACKENDEN ELEKTRODE SOWIE VERFAHREN ZUR VERWALTUNG DES OBEREN ENDES EINER SELBSTBACKENDEN ELEKTRODE
APPAREIL DE DÉTECTION ET PROCÉDÉ DE GESTION DE L'EXTRÉMITÉ SUPÉRIEURE D'UNE ÉLECTRODE À AUTOCUISSON

(30) Priority: 11.11.2011 JP 2011247249
(43) Date of publication of application: 17.09.2014
(73) Proprietor: Denka Company Limited, Tokyo 103-8338 (JP)
(72) Inventor: TANIMURA, Kyoichi, Itoigawa-city Niigata 949-0393 (JP); KAMAMOTO, Junpei, Itoigawa-city Niigata 949-0393 (JP); NANASAWA, Takashi, Itoigawa-city Niigata 949-0393 (JP)
(74) Representative: Feray, Valérie
(86) International application number: PCT/JP2012/066585
(87) International publication number: WO 2013/069334

(56) References cited:
- JP-A- H11 101 631
- JP-A- S53 111 541
- JP-B1- S4 925 804
- JP-B1- S5 124 740
- JP-U- S4 721 232
- JP-U- S54 120 964
- US-A1- 2002 047 718

## Description

### BACKGROUND OF THE INVENTION

The present invention relates to an apparatus for detecting and a method for managing a top end of a self-baking electrode, and more specifically to an apparatus for automatically detecting the position in the vertical direction of a top end of a self-baking electrode (it is also referred to as a baking position or a hardness point), which is used in an electric furnace or the like, and a method for keeping the position in the vertical direction of a top end of the foregoing self-baking electrode within the predetermined management range.

In an electronic furnace for manufacturing calcium carbide, generally, one to three self-baking electrodes are used in order to heat the mixture of caustic lime and coke up to 2000 °C or more. A self-baking electrode is formed in such a way that electrode raw materials are supplied into a cylindrical electrode case, which is vertically arranged on the electronic furnace, and these electrode raw materials are self-baked and solidified at the vicinity of the bottom end of the electrode case by the Joule heat of a current and the conductive heat from inside the electrode case. The electrode raw materials are a massive solid paste in which coke, smokeless coal, black lead, conductive carbon and the like, and coupling agent such as pitch tar and the like are mixed and kneaded. The self-baking electrode is protruded into an electronic furnace through an opening of a ceiling wall of the furnace and is energized from an electrode conductor part in contact with the vicinity of the bottom end of the electrode case on its outer circumference. In an operation of the electronic furnace, the self-baking electrode is gradually exhausted from its bottom end by arc heat. So, a work for sliding down the self-baking electrode on the basis of an exhaust amount is properly performed. When the work for sliding down the self-baking electrode is performed, the electrode raw materials (solid paste) are supplementarilly added into the electrode case from above. Also inside the electrode case, a layer of melted paste exists between the lower self-baking electrode as already-solidified and the upper solid paste. In the melted paste layer, the solid paste is being melted by the Joule heat and the conductive heat, and the melted paste is solidifying into the self-baking electrode. For this reason, the self-baking electrode grows upwardly, and simultaneously with the growth the top end (top surface) of the self-baking electrode moves upwardly. Also, with the work for sliding down the self-baking electrode, the top end of the self-baking electrode is moved downwardly.

As mentioned above, the position, in the vertical direction, of the top end of the self-baking electrode, which moves upwardly with the growth and downwardly with the slide-down work, is required to be kept in a given management range that is set on the basis of the bottom end position of the electrode case and the upper and the lower end positions of the electrode conductor part. This is because as follows: If the vertical direction position of the top end of the self-baking electrode became lower than the management range, there would be a possibility of an electrode trouble happening. For example, the self-baking electrode drops out from the electrode case, and then the solid paste and the like flow into the electronic furnace; and a large current may flow from the electrode conductor part to the electrode case, and thereby the electrode case is melted and damaged. It would take two or three months to recover from such electrode troubles. On the other hand, if the vertical direction position of the top end of the self-baking electrode became higher than the management range, the self-baking electrode would be excessively heated to expand and then the electrode case is deformed, which may result in a possibility that the self-baking electrode could not be slid down. Therefore, conventionally, the vertical direction position of the top end of the self-baking electrode is measured by a human power work such that a round trunk or the like is struck against the self-baking electrode through the solid paste from above. However, in the case of a human power work, a pressure to push down the round trunk or the like into the solid paste varies, so the accuracy of measuring the top end of the self-baking electrode is not good. Further, since the measuring work is carried out during the operation of the electronic furnace, there is a severe security risk such as an electric shock or the like. JP Application Nos. H09-263678 and H10-331063 disclose an apparatus for measuring the position of a bottom end of the self-baking electrode and the like.

Document JP-A-11101631 discloses a method and an apparatus for measuring the position of the top end of a self-baking electrode by using ultrasonic waves.

However, it is also important to manage the position of a top end of the self-baking electrode as mentioned above.

[Patent Document 1] JP Application No. H09-263678
[Patent Document 2] JP Application No. H10-331063

In view of the foregoing problems, an object of the present invention is to provide a self-baking electrode top end detection apparatus and a self-baking electrode top end management method, which can detect and manage a top end of the self-baking electrode automatically, accurately and safely.

### SUMMARY OF THE INVENTION

To solve the above-mentioned problems, according to the invention, there is provided an apparatus for detecting the position of a top end of a self-baking electrode, which is formed by baking electrode raw materials supplied from above into a cylindrical electrode case that is vertically arranged and which is energized from an electrode conductor part in contact with the vicinity of the bottom end of the electrode case on its outer circumferential surface, the apparatus comprising: a protection tube which is fixedly arranged within the electrode case, the bottom end of the protection tube being positioned higher than the upper end of the electrode conductor part; a measurement tube that is arranged through the protection tube; and a measurement tube driving means for lowering the measurement tube with a constant pressure from an initial position until the bottom end of the measurement tube hits the self-baking electrode to stops there.

In the invention, the measurement tube is lowered by the measurement tube driving means from the initial position with a constant pressure, and then the bottom end of the measurement tube hits the self-baking electrode to stop there. From the stop position, the top end or top end surface of the self-baking electrode can be grasped. The position of the top end of the self-baking electrode can be calculated from the lowering amount of the measurement tube and the like. As the measurement tube driving means, an apparatus, a mechanism or the like that can move down the measurement tube under a constant pressure can be used. Concretely, an actuator such as an air cylinder, a hydraulic cylinder or the like, a crane, an electric motor and the like can be cited, but not limited thereto. In a case of using an actuator or a crane, the position of the top end of the self-baking electrode can be determined through the lowering amount of the measurement tube using an encoder or directly by a level gauge. In a case of using an electric motor, the top end of the self-baking electrode can be determined by detecting the position at which the measurement tube stops through change in electric power value or current value. The protection tube protects the measurement tube from impact when electrode raw materials are thrown into the electrode case and also guides the measurement tube upward and downward. Though the protection tube is fixedly arranged inside the electrode case, its position can be suitably changed.

In the invention, at the initial position, the bottom end of the measurement tube may be positioned at the predetermined position which is set between the upper end of the electrode conductor part and the middle point between the upper and the lower ends of the electrode conductor part. The predetermined position is the position at which the bottom end of the measurement tube is set in the initial state. The measurement tube, which has been lowered to detect the top end of the self-baking electrode, is moved upwardly by the measurement tube driving means, and the bottom end of the measurement tube is returned back to the predetermined position.

The constant pressure with which the measurement tube is lowered from the initial position is a pressure with which the measurement tube can pass through the solid and melted pastes of the electrode raw materials while the measurement tube can stop by hitting the self-baking electrode. By making the pressure constant, the measurement precision of the top end of the self-baking electrode would be enhanced. In the invention, the constant pressure is between 2.0 MPa and 6.0 MPa, and around 4.0 MPa is considered to be especially preferable.

In an embodiment of the invention, the measurement tube includes a temperature sensor for measuring a temperature of the bottom end of the measurement tube. As a temperature sensor, thermocouples and the like are preferably cited, but not limited thereto. With the temperature sensor in the measurement tube, the temperature of the top end of the self-baking electrode at which the bottom end of the measurement tube has stopped by hitting can be determined. Further, the temperature of the predetermined position can be measured by the temperature sensor.

In an embodiment of the invention, the apparatus comprises a means for detecting a lowering amount from the initial position of the measurement tube. As this means, for example, position detection sensors such as an encoder and the like are cited, but not limited thereto. The lowering amount from the initial position of the measurement tube can be converted into the position of the bottom end of the measurement tube, on the basis of the position of the lower end of the electrode conductor part and the predetermined position which are grasped in advance.

In an embodiment of the invention, the protection tube has a gas seal for protecting gas from passing upwardly through the protection tube. The gas seal may be a cap for protecting gas generated in the electronic furnace from adversely flowing through the protection tube and escape it from the top end of the protection tube to the outside. The gas can be poisonous gas, combustible gas, etc. such as CO, H₂.

In another aspect of the present invention, there is provided a method for managing the position of a top end of a self-baking electrode, which is formed by baking electrode raw materials supplied from above into a cylindrical electrode case that is vertically arranged and which is energized from an electrode conductor part in contact with the vicinity of the bottom end of the electrode case on its outer circumferential surface, the method comprising the steps of: setting a management range, the lower limit of the range being at the lower end of the electrode conductor part or higher, and the upper limit of the range being at the upper end of the electrode conductor part or lower; locating at least one measurement tube at an initial position; lowering the measurement tube with a constant pressure from the initial position until the bottom end of the measurement tube hits the self-baking electrode to stop there; and judging whether or not the stop position of the bottom end of the measurement tube is within the management range.

In the invention, the measurement tube is lowered from the initial position with a constant pressure, and then the bottom end of the measurement tube hits the self-baking electrode to stop there. From the stop position, the top end of the self-baking electrode can be grasped. Further, it is determined whether or not the top end of the self-baking electrode is within the predetermined management range. The management range is set as follows: The lower limit of the range is at the lower end of the electrode conductor part or higher, and the upper limit is at the upper end of the electrode conductor part or lower. If the top end of the self-baking electrode is below the lower end of the management range, the self-baking electrode would drop out, and thereby the solid paste etc. may flow down and the electrode case may be melted and damaged. In this case, in order to make the top end of the self-baking electrode go within the management range, the lowering work of the slide-down of the self-baking electrode is suppressed or the growth of the self-baking electrode is promoted while the load of the electronic furnace is reduced to suppress the exhaustion of the self-baking electrode. If the top end of the self-baking electrode is above the upper limit of the management range, there would be a possibility that the self-baking electrode excessively bakes to expand, which may deform the electrode case. In this case, a work for sliding down the self-baking electrode is done (in a case that the self-baking electrode is too long to be slid down immediately, the electrode is slid down after the exhaustion of the self-baking electrode is promoted) so that the top end of the self-baking electrode becomes within the management range. Also, by using a plurality of measurement tubes, it would be possible to detect irregularity in the electrode baking or to enhance the management precision.

In the invention, at the initial position, the bottom end of the measurement tube may be positioned at the predetermined position which is set between the upper end of the electrode conductor part and the middle point between the upper and the lower ends of the electrode conductor part. The predetermined position is the position at which the bottom end of the measurement tube is set in the initial state. Also, a preferable range of the constant pressure is between 2.0 MPa and 6.0 MPa, and around 4.0 MPa is considered to be especially preferable.

In an embodiment of the invention, the measurement tube measures a temperature at the position where the bottom end of the measurement tube has stopped by hitting the self-baking electrode. By measuring this temperature, it can be checked whether or not the stop position of the bottom end of the measurement tube is truly positioned at the top end of the self-baking electrode. The temperature of the top end of the self-baking electrode is usually between the temperature (for example, 300 °C) at which the melted paste begins to bake and the temperature (for example, 450 °C) at which the melted paste begins to solidify. Therefore, if the temperature at the position of the bottom end of the measurement tube as the measurement tube hits the self-baking electrode and stops is not within the temperature range, it would be considered that the position of the bottom end of the stopped measurement tube does not correspond to the top end of the self-baking electrode. In this case, a countermeasure is carried out such that the measurement work by the measurement tube is repeated again.

In an embodiment of the invention, the method includes measuring a temperature of the predetermined position. This can be continuously performed for instance, when the measurement tube is positioned at the initial position and the bottom end of the measurement tube is at the predetermined position. The temperature of the predetermined position is usually between the temperature (for example, 110 °C) at which the solid paste begins to soften and the temperature (for example, 300 °C) at which the melted paste begins to bake. Therefore, if the temperature of the predetermined position is not within the temperature range, there would be a possibility that the self-baking electrode cannot be normally solidified. In this case, it would be checked if the electrode is being normally formed by detecting the self-baking electrode top end. If the self-baking electrode is not within the management range and solidification is insufficient, in order to adjust the top end position of the self-baking electrode to within the management range, a countermeasure is done such as by suppressing the work for sliding down the electrode or by reducing the load of the electronic furnace.

According to the present invention, the top end of the self-baking electrode can be grasped from the position at which the bottom end of the measurement tube stops by hitting the self-baking electrode after the measurement tube is lowered with a constant pressure by the measurement tube driving means. Thus, the top end of the self-baking electrode can be detected and managed automatically, accurately and safely.

### BRIEF DESCRIPTION OF THE DRAWINGS

Fig. 1 is a cross-sectional explanation view that schematically shows a situation in which a self-baking electrode is applied to an electronic furnace for manufacturing calcium carbide, and a part of the self-baking electrode top end detection apparatus according to an embodiment of the present invention is shown inside an electrode case.
Fig. 2 is a cross-sectional enlarged explanation view that schematically shows the vicinity of the bottom end of the electrode case.
Fig. 3 is a configuration explanation view of the self-baking electrode top end detection apparatus.
Fig. 4 is a control configuration view of the self-baking electrode top end detection apparatus.
Fig. 5 is an explanation view that schematically shows the inner structure of a measurement tube.
Fig. 6 is a cross-sectional explanation view that shows an example in which a plurality of measurement tubes are used inside the electrode case with no hollow pipe therein.

### DETAILED DESCRIPTION OF THE INVENTION

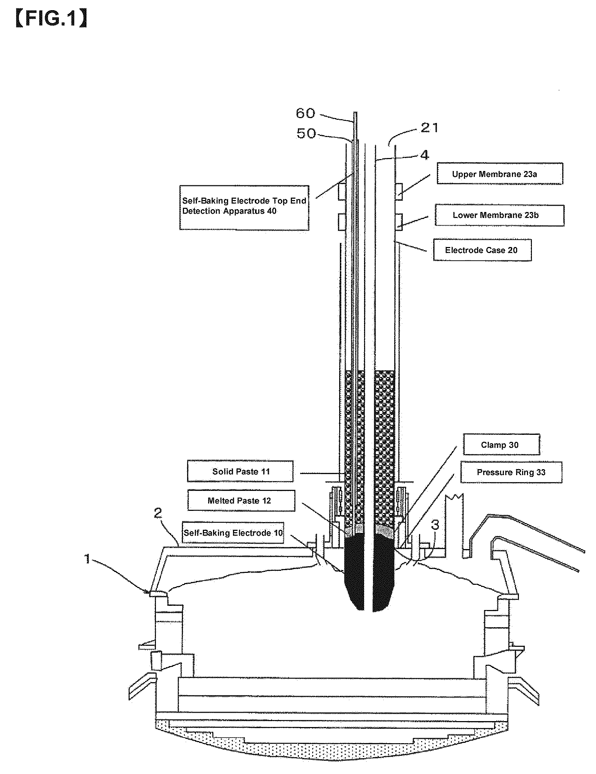

Hereinafter, a preferable embodiment of the present invention is described with reference to the drawings. However, the present invention is not limited to this embodiment. Fig. 1 is a cross-sectional explanation view that schematically shows a situation in which a self-baking electrode 10 is applied to an electronic furnace 1 for manufacturing calcium carbide. The electronic furnace 1 has a circular, horizontal cross-section. On a ceiling wall 2 of the electronic furnace 1, a circular opening 3 is made, and through opening 3, the self-baking electrode 10 is protruded into the electronic furnace 1. In addition, at the position corresponding to the opening 3 on the ceiling wall 2, a cylindrical electrode case 20 is disposed with its axis along the vertical direction. The case 20 is made of rolled steel and intended to form the self-baking electrode 10. In this embodiment, the electrode case 20 has the inner diameter of 1.5 m and the entire length of about 14.5 m. The electrode case 20 is supported by annular upper and lower membranes 23a and 23b, in each of which air has been added. The membranes 23a and 23b tighten a top end side of the case 20. To the electronic furnace 1, three sets of the electrode case 20 and the self-baking electrode 10 are applied at the interval of 120 degrees in the circumferential direction, but only one set of them is shown in Fig. 1. A hollow pipe 4 is arranged at the center within the electrode case 20, and a powder raw material that is one of the raw materials supplied to the electronic furnace 1 is introduced through the hollow pipe 4 to the electronic furnace 1. A massive solid paste 11 is intoruduced into the electrode case 20 from its top end opening 21. The paste 11 is made of electrode raw materials such as coke, smokeless coal, black lead, conductive carbon and the like; and a coupling agent such as pitch tar and the like. The electrode raw materials and the coupling agent are mixed and kneaded. The solid paste 11 is self-baked at the vicinity of the bottom end of the electrode case 20 by the Joule heat of the current and the conductive heat from inside the electronic furnace 1, and thereby the self-baking electrode 10 is formed. The self-baking electrode 10 is held by a number of ribs (not shown) formed on the inner circumferential surface of the electrode case 20 so that the self-baking electrode 10 is not dropped out from the electrode case 20. An annular clamp 30 as an electrode conductor part is arranged to contact with the vicinity of the bottom end of the electrode case 20 on its outer circumferential surface. The clamp 30 is made of copper. The clamp 30 is fixed by an outer pressure ring 33. The clamp 30 can be made of metals such as copper, copper alloy, aluminum, aluminum alloy and the like. Between the self-baking electrode 10 and the solid paste 11, a layer of a melted paste 12 exists, and in the melted paste layer the solid paste 11 is being melted by the Joule heat and the conductive heat. This melted paste 12 is solidified into the self-baking electrode 10. Therefore, the self-baking electrode grows gradually upward, and simultaneously with the growth the top end 10a of the self-baking electrode also moves upwardly (when the vertical position of the self-baking electrode 10 stays constant). On the other hand, in the operation of the electronic furnace 1, the self-baking electrode 10 is gradually exhausted from its bottom end by the arc heat and the like. For this reason, a work for sliding down the self-baking electrode 10 on the basis of the exhaustion amount is suitably required. The work for sliding down the self-baking electrode 10 is carried out, for instance, about 40 times per day where the lowering amount of one time is 8 mm. With this work for sliding down, the bottom end of the self-baking electrode 10 is lowered along with the top end 10a of the self-baking electrode 10. An object of the present invention is to detect the position, in the vertical direction, of the top end 10a of the self-baking electrode 10 and to keep it within the predetermined management range as will be described later.

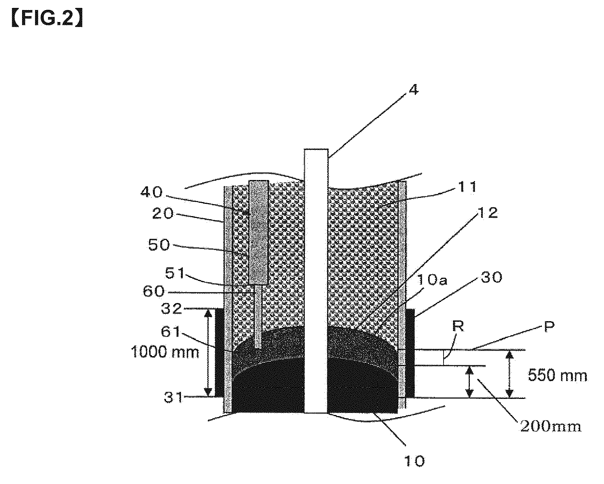

Fig. 2 is a cross-sectional explanation view that schematically shows the vicinity of the bottom end of the electrode case 20 as enlarged. The self-baking electrode 10 is energized from the clamp 30 in contact with the vicinity of the bottom end of the electrode case 20 on its outer circumferential surface. For this reason, if the top end (hereafter, also referred to as "the electrode top end") 10a of the self-baking electrode 10 is at below the lower end 31 of the clamp 30, a large current would flow from the clamp 30 to the electrode case 20, which may melt and damage the electrode case 20 or drop the self-baking electrode 10 out from the electrode case 20. In the latter case, the solid paste 11 and the like would flow into the electronic furnace 1. On the other hand, if the electrode top end 10a is at above the upper end 32 of the clamp 30, the self-baking electrode 10 would be excessively baked and expanded, deforming the electrode case 20, which may prevent the self-baking electrode 10 from being slid down. For this reason, it is required to keep the electrode top end 10a within a given management range, and the maximum management range is between the lower end 31 and the upper end 32 of the clamp 30. Moreover, to heighten safety etc., it is desirable to set a narrower management range between the lower end 31 and the upper end 32 of the clamp 30, and to keep the electrode top end 10a within the narrower range. The referential number 40 in Figs. 1 and 2 indicates a self-baking electrode top end detection apparatus (hereafter, referred to merely as "the detecting apparatus") according to one embodiment of the present invention. The detecting apparatus is for determining the position in the vertical direction of the electrode top end 10a.

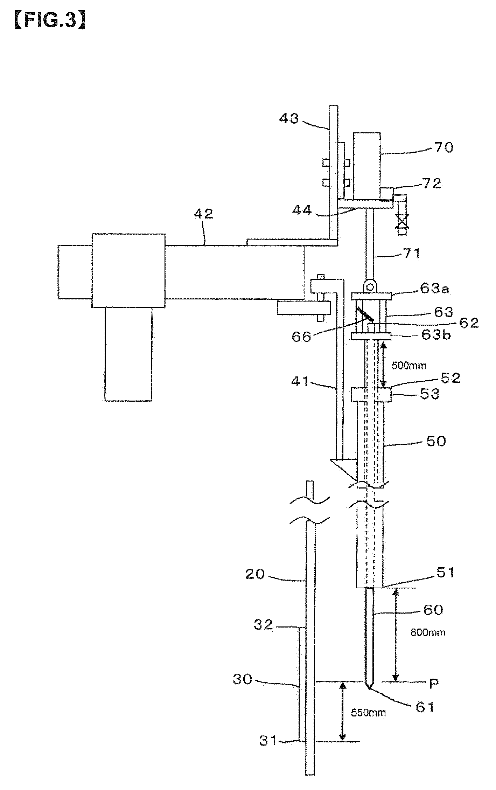

The detecting apparatus 40 comprises: a cylindrical protection tube 50 that is fixedly, vertically arranged inside the electrode case 20; a measurement tube 60 that is arranged through the protection tube 50 and longer than the protection tube 50; and an air cylinder 70 (see Fig. 3) that is a measurement tube driving means for lowering the measurement tube 60 with a constant pressure. The protection tube 50 is made of steel and has the inner diameter of 47.8 mm and the length of about 12.9 m. Then, the bottom end 51 of the tube 50 is positioned above the upper limit of the above-mentioned management range. In the example of Fig. 2, the bottom end 51 is at a position somewhat higher than the upper end 32 of the clamp 30. A top end 52 of the protection tube 50 is positioned above the top end opening 21 of the electrode case 20. The measurement tube 60 is made of steel, which has the inner diameter of 23 mm and the length of about 14 m. The tube 60 is arranged in a manner that its bottom and top ends are exposed outwardly from the bottom and top ends 51 and 52 of the measurement tube 60, respectively. The bottom end 61 of the measurement tube 60 is positioned, in an initial state, at "the predetermined position," which is set at the upper limit position of the management range as an example. The top end 62 of the measurement tube 60 is connected with the air cylinder 70 as will be described later. In the horizontal direction inside the electrode case 20, the protection tube 50 and the measurement tube 60 are arranged at a nearly middle point between the center and the inner circumferential surface (the radially outer end) of the electrode case 20. This is because the top surface of the self-baking electrode 10 is not flat due to protuberance at the side of the hollow pipe 4 positioned at the center rather than the radially outer side, and then it is intended to detect the vertical direction position closer to the average of the top surface.

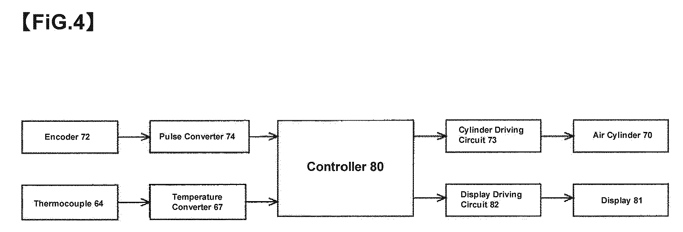

Fig. 3 is a configuration explanation view of the detecting apparatus 40. The detecting apparatus 40 includes the foregoing air cylinder 70. In this embodiment, the air cylinder 70 has a cylinder pressure of 0.3 MPa and the cylinder diameter of 100 mm. The air cylinder 70 has a cylinder rod 71 that can be moved up and down. A lower end of the cylinder rod 71 is pinned to an upper flange 63a of a linkage body 63. The top end of the measurement tube 60 is connected to a lower flange 63b of the linkage body 63. By supplying air into the air cylinder 70 from an air supplier as not shown, the cylinder rod 71 is lowered, and thereby the measurement tube 60 can move downward with a constant pressure (4.0 MPa) via the linkage body 63. In addition, by removing the air from the cylinder 70, the cylinder rod 71 goes up, and then the measurement tube 60 can move upward. The air cylinder 70 is provided with an encoder 72 as a means for detecting a lowering amount of the cylinder rod 71, namely, a lowering amount of the measurement tube 60. Fig. 4 is a control configuration view of the detecting apparatus 40. The detecting apparatus 40 includes a controller 80 that includes CPU, ROM, RAM and input/output interfaces (such as A/D and D/A converters, an amplifier and the like) and so on. The start of air supply or air removal to or from the air cylinder 70 is controlled by the controller 80 via a cylinder driving circuit 73. The position of the lower end 31 of the clamp 30, the positions of the upper and the lower limits of the management range, and the predetermined position and the like are preliminarily input to the controller 80. In addition, when the electrode top end 10a is detected, the lowering amount of the cylinder rod 71 is also input to the controller 80 from the encoder 72 via a pulse converter 74. The controller 80 converts the lowering amount of the cylinder rod 71 into the distance from the lower end 31 of the clamp 30 to the bottom end 61 of the measurement tube 60 on the basis of the foregoing preliminarily input values, and then displays the distance on a display 81 via a display driving circuit 82. To the controller 80, a temperature measurement value from a thermocouple 64 as described later is also input via a temperature converter 67, and the temperature measurement value is displayed on the display 81 too.

With reference to Fig. 3, the protection tube 50 is supported by a protection tube supporter 41, where one end of the supporter 41 is connected with the protection tube 50 on its upper side. The other end of the protection tube supporter 41 is connected to a main frame 42. The air cylinder 70 is supported by a cylinder supporter 43 that includes a cylinder support base 44, and the cylinder supporter 43 is also connected to the main frame 42. By adjusting the connecting position of the protection tube supporter 41 with the main frame 42, it is possible to change the vertical direction position of the protection tube 50 etc. Further, by adjusting the level of the cylinder support base 44 with respect to the cylinder supporter 43, it is possible to change the vertical direction position of the air cylinder 70 etc. The bottom end of the protection tube 50 is open, and therefore there is a possibility that gas generated within the electronic furnace 1, for example, poisonous gas and combustible gas such as CO, H₂, etc., would adversely flow through the protection tube 50 and flow out from the top end 52 of the protection tube 50 to the outside. In order to protect this, a gas seal 53 such as f a cap etc. is disposed at the top end of the protection tube 50.

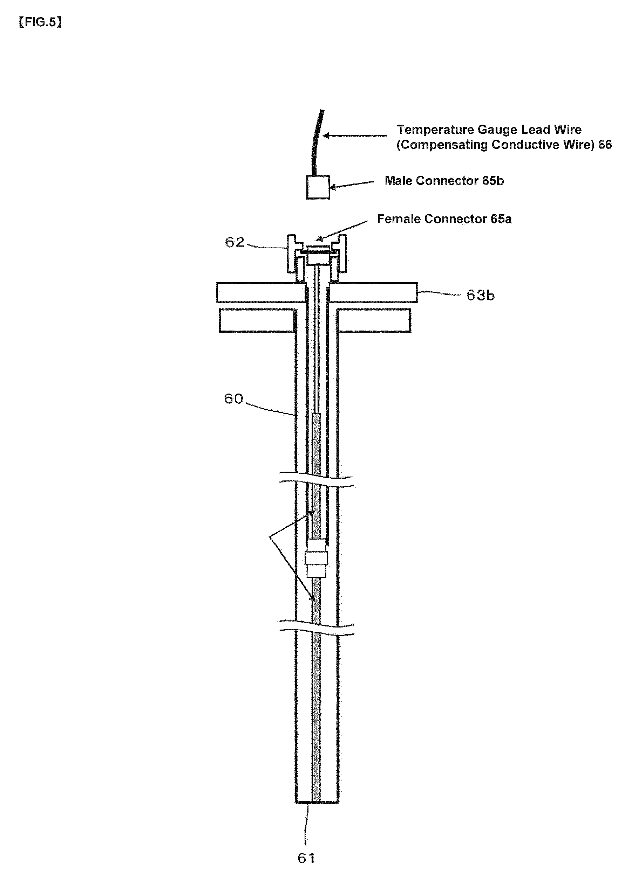

Fig. 5 is an explanation view that schematically shows the inner structure of the measurement tube 60. Within the measurement tube 60, there is arranged a sheath thermocouple (hereafter, referred to merely as "the thermocouple") 64 as a temperature sensor. In the thermocouple 64, a male connector 65b of a temperature gauge lead wire (compensating conductive wire) 66 is connected to a female connector 65a that is placed in the lower flange 63b of the linkage body 63. The thermocouple 64 can measure temperatures of the solid paste 11, the melted paste 12 and the self-baking electrode 10 as the bottom end 61 of the measurement tube 60 contacts each of them. The other end of the temperature gauge lead wire 66 is connected to the controller 80 through the temperature converter 67, and temperature measurement values of the thermocouple 64 are input to the controller 80 in real time and displayed on the display 81.

Next, as a method of using the self-baking electrode top end detection apparatus 40, an embodiment of a method for managing a top end of the self-baking electrode in accordance with the present invention will be described. With reference to Fig. 2, in this embodiment, the vertical direction length between the lower and the upper ends 31 and 32 of the clamp 30 is 1000 mm, and the management range R for keeping the top end 10a of the self-baking electrode 10 is set such that its lower limit is 200 mm higher than the lower end 31 of the clamp 30, and its upper limit is 550 mm higher than the lower end 31 of the clamp. Within the electrode case 20, the bottom end 51 of the protection tube 50 is arranged at the position of 800 mm higher than the upper limit of the management range R (the position of 1350 mm higher than the lower end 31 of the clamp 30). Moreover, the predetermined position P is set at the same position as the upper limit of the management range R (the position of 550 mm higher than the bottom end of the clamp 30 to the above), and at the position P the bottom end 61 of the measurement tube 60 is placed in the initial state before the tube 60 is lowered. This predetermined position P is at a level near the top end of the layer of the melted paste 12. In the initial state, the temperature of the predetermined position P is continuously measured by the thermocouple 64 of the measurement tube 60. This is intended to confirm that the temperature of the predetermined position P is between 110 °C at which the solid paste 11 begins to soften and 300 °C at which the melted paste 12 begins to bake.

When an operator actuates the air cylinder 70 through the controller 80, the measurement tube 60 at the initial position is lowered with a constant pressure of 4.0 MPa, and then the bottom end 61 of the measurement tube 60 moves downwardly from the predetermined position P. Then, when the bottom end 61 of the measurement tube 60 stops, the position, in the vertical direction, of the bottom end 61 is measured as a distance from the lower end 31 of the clamp 30. The controller 80 displays that position on the display 81. The operator checks whether or not the stop position of the bottom end 61 of the measurement tube 60 is within the management range R. If the stop position of the bottom end 61 of the measurement tube 60 is within the management range R, it is estimated that the stop position should indicate the position of the top end 10a of the self-baking electrode 10. If the stop position of the bottom end 61 of the measurement tube 60 is not within the management range R, it is estimated that the top end 10a of the self-baking electrode 10 is not within the management range R. In the latter case, a countermeasure to move the top end 10a of the self-baking electrode 10 to within the management range R is carried out. For example, if the stop position is lower than the lower limit of the management range R, sliding down the self-baking electrode 10 is suppressed, and if the stop position is higher than the upper limit of the management range R, a work of sliding down the self-baking electrode 10 is done.

After confirming that the stop position of the bottom end 61 of the measurement tube 60 is within the management range R, the temperature of the stop position is continuously measured by the thermocouple 64, and it is checked if this temperature is between 300 °C at which the melted paste 12 begins to bake and 450 °C at which the melted paste 12 begins to solidify. If the temperature of the stop position of the bottom end 61 of the measurement tube 60 is within the foregoing range, it is also supported by an aspect of temperature that the stop position is at the top end 10a of the self-baking electrode 10. In this case, a work for detecting the electrode top end 10a is completed, and then the measurement tube 60 is moved upwardly by the air cylinder 70, and the bottom end 61 of the measurement tube 60 is returned to the predetermined position P. Here again, an operation of monitoring the temperature at the predetermined position P is continued. If the temperature of the stop position of the bottom end 61 of the measurement tube 60 is not within the range between 300 °C and 450 °C, there is a possibility that the stop position would not be at the top end 10a of the self-baking electrode 10. In this case, a countermeasure is done such that a work for detecting the electrode top end 10a is repeated again. The foregoing detection and temperature measurement operations can be performed at the same time with respect to the three self-baking electrodes 10 applied to the electronic furnace 1 through the controller 80. Also, the operations can be done in a wired or wireless remote controlled manner by the controller 80. Thereby, a risk of electric shock at work can be resolved. Further, since the measurement tube 60 can be lowered under a constant pressure by the air cylinder 70, a precision of measuring the position of the electrode top end 10a can also be improved.

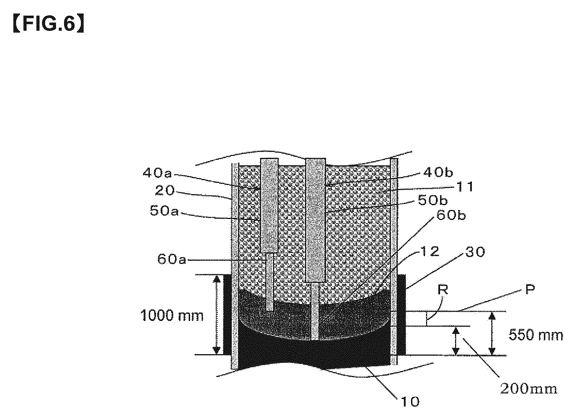

Fig. 6 is a cross-sectional explanation view that shows an example in which a plurality of detecting apparatuses 40 (40a and 40b) as mentioned above are used in the electrode case 20 that does not include the hollow pipe 4. In the case without the hollow pipe 4, the top surface of the self-baking electrode 10 protuberates at the radially outer side rather than at the center side. This reason is considered as follows: That is, since the transmission of the Joule heat from the clamp 30 to the center of the self-baking electrode 10 is slow and the center is hard to receive the radiation heat in the electronic furnace 1, the baking of the center is suppressed. In the example of Fig. 6, a first detecting apparatus 40a, which includes a protection tube 50a and a measurement tube 60a, is arranged at a nearly middle point between the center of the electrode case 20 and the inner circumferential surface of the electrode case 20, similarly to the example of Fig. 2. In addition, a second detecting apparatus 40b, which includes a protection tube 50b and a measurement tube 60b, is arranged at the center of the electrode case 20. The process of using the detecting apparatuses 40a and 40b is basically equal to the above-mentioned process, and they are driven at the same time by the controller 80 (they may not be driven at the same time). Using the plurality of measurement tubes 60a and 60b may make it possible to detect irregularity in the electrode baking more accurately, improving the management precision of the electrode top end 10a. Therefore, for example, the temperature measurement operation at the predetermined position P and at the stop position of the bottom end 61 of the measurement tube 60 may be omitted as the position of the top end 10a of the self-baking electrode 10 is detected. Though two detecting apparatuses 40a and 40b are shown in Fig. 6, three or more detecting apparatuses can be used.

### DESCRIPTION OF REFERENCE NUMBERS

- 1: Electronic Furnace
- 10: Self-Baking Electrode
- 10a: Top End of Self-Baking Electrode
- 11: Solid Paste
- 12: Melted Paste
- 20: Electrode Case
- 30: Clamp (Electrode Conductor Part)
- 40, 40a, 40b: Self-Baking Electrode Top End Detection Apparatus
- 50, 50a, 50b: Protection Tube
- 60, 60a, 60b: Measurement Tube
- 61: Bottom End of measurement tube
- 64: Sheath Thermocouple
- 70: Air Cylinder
- 72: Encoder
- 80: Controller
- P: Constant Position
- R: Management Range

## Claims

1. An apparatus for detecting the position of a top end of a self-baking electrode (10), which is formed by baking electrode raw materials supplied from above into a cylindrical electrode case (20) that is vertically arranged and which is energized from an electrode conductor part in contact with the vicinity of the bottom end of the electrode case (20) on its outer circumferential surface, the apparatus comprising: a protection tube (50) which is fixedly arranged within the electrode case (20), the bottom end of the protection tube (50) being positioned higher than the upper end of the electrode conductor part; a measurement tube (60) that is arranged through the protection tube (50); and being **characterised by** a measurement tube (60) driving means for lowering the measurement tube (60) with a constant pressure from an initial position until the bottom end of the measurement tube (60) hits the self-baking electrode (10) to stops there.

2. The apparatus in claim 1 wherein, at the initial position, the bottom end of the measurement tube (60) is positioned at the predetermined position which is set between the upper end of the electrode conductor part and the middle point between the upper and the lower ends of the electrode conductor part.

3. The apparatus in claim 1 or 2, wherein the constant pressure is between 2.0 MPa and 6.0 MPa.

4. The self-baking electrode (10) top end detection apparatus in any one of claims 1 to 3, wherein the measurement tube (60) includes a temperature sensor for measuring a temperature of the bottom end of the measurement tube (60).

5. The apparatus in any one of claims 1 to 4, comprising a means for detecting a lowering amount from the initial position of the measurement tube (60).

6. The apparatus in any one of claims 1 to 5, wherein the protection tube (50) has a gas seal for protecting gas from passing upwardly through the protection tube (50).

7. The apparatus in any one of claims 1 to 6, wherein the measurement tube (60) driving means includes an air cylinder (70).

8. A method for managing the position of a top end of a self-baking electrode (10), which is formed by baking electrode raw materials supplied from above into a cylindrical electrode case (20) that is vertically arranged and which is energized from an electrode conductor part in contact with the vicinity of the bottom end of the electrode case (20) on its outer circumferential surface, the method comprising the steps of: setting a management range, the lower limit of the range being at the lower end of the electrode conductor part or higher, and the upper limit of the range being at the upper end of the electrode conductor part or lower; locating at least one measurement tube (60) at an initial position; lowering the measurement tube (60) with a constant pressure from the initial position until the bottom end of the measurement tube (60) hits the self-baking electrode (10) to stop there; and judging whether or not the stop position of the bottom end of the measurement tube (60) is within the management range.

9. The method in claim 8 wherein, at the initial position, the bottom end of the measurement tube (60) is positioned at the predetermined position which is set between the upper end of the electrode conductor part and the middle point between the upper and the lower ends of the electrode conductor part.

10. The method in claim 8 or 9, wherein the constant pressure is between 2.0 MPa and 6.0 MPa.

11. The method in any one of claims 8 to 10, wherein the measurement tube (60) measures a temperature at the position where the bottom end of the measurement tube (60) has stopped by hitting the self-baking electrode (10).

12. The method in claim 9, measuring a temperature of the predetermined position.

## Patentansprüche

1. Vorrichtung zum Erkennen der Position eines oberen Endes einer selbstbackenden Elektrode (10), welche durch Backen von Elektrodenrohmaterialien gebildet wird, die von oben in ein zylindrisches Elektrodengehäuse (20) eingeführt werden, das vertikal angeordnet ist, und welche von einem Elektrodenleiterteil in Kontakt mit der Nachbarschaft des unteren Endes des Elektrodengehäuses (20) an seiner unteren Umfangsfläche gespeist wird, wobei die Vorrichtung umfasst: ein Schutzrohr (50), das innerhalb des Elektrodengehäuses (20) fest angeordnet ist, wobei das untere Ende des Schutzrohrs (50) höher als das obere Ende des Elektrodenleiterteils positioniert ist; ein Messrohr (60), das durch das Schutzrohr (50) angeordnet ist; und **gekennzeichnet durch** ein Antriebsmittel des Messrohrs (60) zum Senken des Messrohrs (60) mit einem konstanten Druck von einer Ausgangsposition, bis das untere Ende des Messrohrs (60) gegen die selbstbackende Elektrode (10) stößt, um dort zu stoppen.

2. Vorrichtung nach Anspruch 1, wobei in der Ausgangsposition das untere Ende des Messrohrs (60) in der vorbestimmten Position positioniert ist, die zwischen dem oberen Ende des Elektrodenleiterteils und dem Mittelpunkt zwischen den oberen und unteren Enden des Elektrodenleiterteils festgelegt ist.

3. Vorrichtung nach Anspruch 1 oder 2, wobei der konstante Duck 2,0 MPa bis 6,0 MPa beträgt.

4. Vorrichtung zur Erkennung eines oberen Endes einer selbstbackenden Elektrode (10) nach einem der Ansprüche 1 bis 3, wobei das Messrohr (60) einen Temperatursensor zum Messen der Temperatur des unteren Endes des Messrohrs (60) umfasst.

5. Vorrichtung nach einem der Ansprüche 1 bis 4, umfassend ein Mittel zum Erkennen eines Senkungsausmaßes von der Ausgangsposition des Messrohrs (60).

6. Vorrichtung nach einem der Ansprüche 1 bis 5, wobei das Schutzrohr (50) eine Gasdichtung zum Schützen davor aufweist, dass Gas durch das Schutzrohr (50) nach oben durchströmt.

7. Vorrichtung nach einem der Ansprüche 1 bis 6, wobei das Antriebsmittel des Messrohrs (60) einen Luftzylinder (70) umfasst.

8. Verfahren zum Steuern der Position eines oberen Endes einer selbstbackenden Elektrode (10), welche durch Backen von Elektrodenrohmaterialien gebildet wird, die von oben in ein zylindrisches Elektrodengehäuse (20) eingeführt werden, das vertikal angeordnet ist, und welche von einem Elektrodenleiterteil in Kontakt mit der Nachbarschaft des unteren Endes des Elektrodengehäuses (20) an seiner unteren Umfangsfläche gespeist wird, wobei das Verfahren die folgenden Schritte umfasst: Festlegen eines Steuerbereichs, wobei die untere Grenze des Bereichs am unteren Ende des Elektrodenleiterteils oder darüber ist, und die obere Grenze des Bereichs am oberen Ende des Elektrodenleiterteils oder darunter ist; Anordnen mindestens eines Messrohrs (60) in einer Ausgangsposition; Senken des Messrohrs (60) mit einem konstanten Druck von der Ausgangsposition, bis das untere Ende des Messrohrs (60) gegen die selbstbackende Elektrode (10) stößt, um dort zu stoppen; und Beurteilen, ob die Stoppposition des unteren Endes des Messrohrs (60) innerhalb des Steuerbereichs ist oder nicht.

9. Verfahren nach Anspruch 8, wobei in der Ausgangsposition das untere Ende des Messrohrs (60) in der vorbestimmten Position positioniert ist, die zwischen dem oberen Ende des Elektrodenleiterteils und dem Mittelpunkt zwischen den oberen und unteren Enden des Elektrodenleiterteils festgelegt ist.

10. Verfahren nach Anspruch 8 oder 9, wobei der konstante Duck 2,0 MPa bis 6,0 MPa beträgt.

11. Verfahren nach einem der Ansprüche 8 bis 10, wobei das Messrohr (60) eine Temperatur in einer Position misst, in welcher das untere Ende des Messrohrs (60) durch Stoßen gegen die selbstbackende Elektrode (10) gestoppt hat.

12. Verfahren nach Anspruch 9, das eine Temperatur der vorbestimmten Position misst.

## Revendications

1. Appareil pour détecter la position d'une extrémité supérieure d'une électrode à auto-cuisson (10), qui est formée par la cuisson de matériaux bruts d'électrode fournis à partir du dessus dans un boîtier d'électrode (20) cylindrique qui est agencé verticalement et qui est alimentée à partir d'une partie de conducteur d'électrode en contact avec le voisinage de l'extrémité inférieure du boîtier d'électrode (20) sur sa surface circonférentielle extérieure, l'appareil comprenant : un tube de protection (50) qui est agencé de manière fixe dans le boîtier d'électrode (20), l'extrémité inférieure du tube de protection (50) étant positionnée plus haut que l'extrémité supérieure de la partie de conducteur d'électrode ; un tube de mesure (60) qui est agencé à travers le tube de protection (50) ; et étant **caractérisé par** des moyens d'entraînement de tube de mesure (60) pour abaisser le tube de mesure (60) avec une pression constante à partir d'une position initiale jusqu'à ce que l'extrémité inférieure du tube de mesure (60) heurte l'électrode à auto-cuisson (10) pour s'arrêter à cet endroit.

2. Appareil selon la revendication 1 dans lequel, à la position initiale, l'extrémité inférieure du tube de mesure (60) est positionnée à la position prédéterminée qui est fixée entre l'extrémité supérieure de la partie de conducteur d'électrode et le point central entre les extrémités supérieure et inférieure de la partie de conducteur d'électrode.

3. Appareil selon la revendication 1 ou 2, dans lequel la pression constante est entre 2,0 MPa et 6,0 MPa.

4. Appareil de détection d'extrémité supérieure d'électrode à auto-cuisson (10) selon l'une quelconque des revendications 1 à 3, dans lequel le tube de mesure (60) comprend un capteur de température pour mesurer une température de l'extrémité inférieure du tube de mesure (60).

5. Appareil selon l'une quelconque des revendications 1 à 4, comprenant des moyens pour détecter une quantité d'abaissement à partir de la position initiale du tube de mesure (60).

6. Appareil selon l'une quelconque des revendications 1 à 5, dans lequel le tube de protection (50) comporte un joint d'étanchéité aux gaz pour empêcher un gaz de passer vers le haut à travers le tube de protection (50).

7. Appareil selon l'une quelconque des revendications 1 à 6, dans lequel les moyens d'entraînement de tube de mesure (60) comprennent un vérin pneumatique (70).

8. Procédé pour gérer la position d'une extrémité supérieure d'une électrode à auto-cuisson (10), qui est formée par la cuisson de matériaux bruts d'électrode fournis à partir du dessus dans un boîtier d'électrode (20) cylindrique qui est agencé verticalement et qui est alimentée à partir d'une partie de conducteur d'électrode en contact avec le voisinage de l'extrémité inférieure du boîtier d'électrode (20) sur sa surface circonférentielle extérieure, le procédé comprenant les étapes : de définition d'une plage de gestion, la limite inférieure de la plage étant à l'extrémité inférieure de la partie de conducteur d'électrode ou plus haut, et la limite supérieure de la plage étant à l'extrémité supérieure de la partie de conducteur d'électrode ou plus bas ; de positionnement d'au moins un tube de mesure (60) à une position initiale ; d'abaissement du tube de mesure (60) avec une pression constante à partir de la position initiale jusqu'à ce que l'extrémité inférieure du tube de mesure (60) heurte l'électrode à auto-cuisson (10) pour s'arrêter à cet endroit ; et de jugement si, oui ou non, la position d'arrêt de l'extrémité inférieure du tube de mesure (60) est dans la plage de gestion.

9. Procédé selon la revendication 8, dans lequel, à la position initiale, l'extrémité inférieure du tube de mesure (60) est positionnée à la position prédéterminée qui est fixée entre l'extrémité supérieure de la partie de conducteur d'électrode et le point central entre les extrémités supérieure et inférieure de la partie de conducteur d'électrode.

10. Procédé selon la revendication 8 ou 9, dans lequel la pression constante est entre 2,0 MPa et 6,0 MPa.

11. Procédé selon l'une quelconque des revendications 8 à 10, dans lequel le tube de mesure (60) mesure une température à la position à laquelle l'extrémité inférieure du tube de mesure (60) s'est arrêtée en heurtant l'électrode à auto-cuisson (10).

12. Procédé selon la revendication 9, qui mesure une température de la position prédéterminée.
